# EUROPÄISCHE PATENTSCHRIFT

(11) **EP 3 043 952 B1**
(45) Veröffentlichungstag und Bekanntmachung des Hinweises auf die Patenterteilung: **22.04.2020**
(21) Anmeldenummer: 14762025.6
(22) Anmeldetag: 12.09.2014
(51) Int. Cl.: B23K 37/02, B23K 9/028, B23K 9/173, B65H 75/00

(54) **ORBITALSCHWEISSVORRICHTUNG MIT VEREINFACHTEM SPULENKOPPLUNGSSYSTEM**
ORBITAL WELDING APPARATUS COMPRISING A SIMPLIFIED REEL COUPLING SYSTEM
DISPOSITIF DE SOUDAGE ORBITAL AVEC SYSTÈME DE COUPLAGE DE BOBINE SIMPLIFIÉ

(30) Priorität: 13.09.2013 DE 102013015369
(43) Veröffentlichungstag der Anmeldung: 20.07.2016
(73) Patentinhaber: SPA Pipe Welding Solutions GmbH & Co. KG, 82194 Gröbenzell (DE)
(72) Erfinder: DIEZ, Laura, 87430 Kempten (DE); JUNIOR, Volker, 82166 Gräfelfing (DE); NIRSCHL, Matthias, 81371 München (DE); STEINMEIER, Wanja, 81371 München (DE); FÖRG, Christian, 81539 München (DE); TÜRCK, Harald, 85716 Unterschleissheim (DE)
(74) Vertreter: Ascherl, Andreas
(86) Internationale Anmeldenummer: PCT/EP2014/069486
(87) Internationale Veröffentlichungsnummer: WO 2015/036534

(56) Entgegenhaltungen:
- US-A- 1 615 149
- US-A- 3 806 694
- US-A- 5 227 601
- US-A1- 2009 236 462

## Beschreibung

Die vorliegende Erfindung bezieht sich gemäß Anspruch 1 auf eine Orbitalschweißvorrichtung zum Verbinden von Rohren. Die Merkmale der Präambel des Anspruchs 1 sind beispielsweise in der Druckschrift US 3 806 694 A offenbart.

Die vorliegende Erfindung liegt auf dem technischen Gebiet der Fügetechnik. Leitungen, insbesondere Leitungen zum Führen von Gasen, bestehen oftmals aus Rohren, insbesondere aus Metall, und werden je nach Anwendungsgebiet mittels Kleben, Löten oder Schweißen miteinander verbunden.

Es werden insbesondere beim Onshore-Schweißen von Pipelines (Gas& Öl-Pipelines) Orbitalschweißsysteme (Bugs) genutzt, wobei das Schweißgerät auf einem Positionierband fährt, das um ein Rohr befestigt wird, und eine zwischen die einzelnen Rohre der Pipeline verbindende Schweißnaht mit einer oder mehreren Raupen nebeneinander oder übereinander einbringt.

Die Druckschrift WO2009122217A1 offenbart z.B. einen Schweißbug der über einen fest installierten Stirnradantrieb gegenüber einem Führungsband bewegt wird. Bei Schweißbugs, wie z.B. dem aus der Druckschrift WO2009122217A1 oder einem aus der Druckschrift EP 1100645 B1 bekannten Schweißbug, ist die Spule horizontal bzw. leicht geneigt auf dem Schweißbug angebracht. Dies bringt den Nachteil mit sich, dass der Draht auf dem Weg von der Spule zum Brenner um zwei Achsen verwunden werden muss, um die Schweißqualität zu gewährleisten, ist es jedoch wichtig, dass der Draht bei Ankunft an der Schweißstelle möglichst wenig vorgekrümmt ist, damit der zum Schweißen erforderliche Lichtbogen möglichst stabil aufrecht erhalten werden kann.

Die Druckschrift US 5,676,857 offenbart ein System zum Verschweißen von Rohren, um eine lange, kontinuierliche Pipeline zu schaffen. Ein Schweißwagen bzw. ein Schweißbug ist an einer Führungsschiene, die sich um den Umfang des Rohres erstreckt, montiert. Der Schweißwagen ist mit einem Drahtvorschub, einem Motor, um den Drahtvorschub anzutreiben, und einem Antriebsmotor zum Bewegen des Bugs entlang der Führung ausgestattet. Die Geschwindigkeit des Bugs und des Drahtvorschubs ist variierbar, während der Bug kontinuierlich um das Rohr bewegt wird. Die erste Schweißnaht oder Wurzelschweißnaht wird gemäß dem Gegenstand der US 5,676,857 von außerhalb des Rohres geschweißt. Der aus der US 5,676,857 bekannte Bug wird dabei über einen fest installierten Stirnradantrieb angetrieben. Weiterhin weist der Bug einen Halterahmen zum Halten einer Spule zur Drahtaufnahme auf. Die Spule ist dabei gemäß dem Gegenstand der US 5,676,857 mittels einer Schraubverbindung an dem Halterahmen angeschraubt.

Übliche Spulen, auf denen der Schweißdraht vorgehalten wird wiegen in der Regel um die 5kg und werden, wie bei der US 5,676,857, auf dem Gerät mitgefahren. Die Spulen bewirken aufgrund ihres Gewichts und ihrer Form, dass sie äußerst unhandlich sind und daher eine Montage der Spule an einem Bug, insbesondere in einem Gebrauchszustand, für einen einzelnen Arbeiter äußerst umständlich ist. Insgesamt erfordert der Spulentausch vergleichsweise viel Zeit und erfolgt ergonomisch ungünstig. Weitere Druckschriften, die Schweißeinrichtungen offenbaren sind z.B. US3806694A, US5227601A, US2009/236462A1, US1615149A.

Es ist somit Aufgabe der vorliegenden Erfindung eine Lösung, insbesondere in Form einer Orbitalschweißvorrichtung, bereitzustellen, mittels welcher ein Austausch der Spule erleichtert, insbesondere beschleunigt und vereinfacht, wird. Weiterhin ist es eine Aufgabe der vorliegenden Erfindung eine Orbitalschweißvorrichtung so auszugestalten, dass eine hohe Schweißqualität gewährleistet wird.

Die zuvor genannte Aufgabe wird durch eine Orbitalschweißvorrichtung gemäß Anspruch 1, insbesondere zum Onshore-Schweißen, gelöst. Die Orbitalschweißvorrichtung weist dabei mindestens ein Rahmenteil zum Anordnen einer oder mehrerer Funktionseinrichtungen, einen Kopplungsbereich zum Ankoppeln an ein Führungsband, wobei in einem Betriebszustand das Führungsband bevorzugt an einem Rohr befestigt ist, das Führungsband das Rohr in Umfangsrichtung umschließt und sich das Führungsband in axialer Richtung erstreckt, wobei es dabei das Rohr abschnittsweise überlagert, eine Anschlusseinrichtung zum Anschließen von mindestens einer Zuführleitung, eine mit der Anschlusseinrichtung über eine Zuführleitung verbundener Schweißkopf, mindestens eine Antriebseinrichtung, wobei die Antriebseinrichtung zum Bewegen der Schweißvorrichtung gegenüber dem Führungsband mit dem Führungsband zusammenwirkt, und eine am Rahmenteil angeordnete Halteeinrichtung zum Aufnehmen einer Achseneinrichtung umfasst. Die Halteeinrichtung nimmt dabei die Achseneinrichtung bevorzugt derart auf, dass sich die Längsachse der Achseneinrichtung im Wesentlichen horizontal erstreckt, wobei die Achseneinrichtung zum Aufnehmen einer Schweißdrahtbevorratungseinrichtung ausgebildet ist, wobei die Achseneinrichtung die Schweißdrahtbevorratungseinrichtung derart aufnimmt, dass sie zumindest zeitweise gegenüber dem Rahmenteil drehbar ist, wobei die Achseneinrichtung ein Bedienelement, insbesondere einen Griff, auf, wobei die Achseneinrichtung zumindest zeitweise mittels des Bedienelements bewegbar ist, und wobei die Achseneinrichtung mittels einer Fixiereinrichtung gegenüber dem Rahmenteil in mindestens einer Stellung arretierbar ist.

Als Funktionseinrichtung kann hierbei z.B. eine Antriebseinrichtung, eine Anschlusseinrichtung, eine Steuerungseinrichtung, eine einen Kopplungsbereich definierende Kopplungseinrichtung, etc. angesehen werden.

Eine sich im Wesentlichen horizontal erstreckende Achse ist in einem mit der Halteeinrichtung gekoppelten Zustand in einem Winkel von z.B. weniger als 30° und weiter bevorzugt in einem Winkel von weniger als 15° und besonders bevorzugt in einem Winkel von weniger als 5° gegenüber der Horizontalen geneigt.

Diese Lösung ist vorteilhaft, da das Einlegen und/oder Austauschen der Spule ergonomischer gestalten ist, wodurch z.B. auch ein verbessertes einhändiges Einlegen und/oder Austauschen ermöglicht wird. Aufgrund der bevorzugt horizontal ausgerichteten Rotationsachse der Schweißdrahtbevorratungseinrichtung ist ferner die Möglichkeit geboten, dass der Draht auf dem Weg zum Brenner weniger Verwindung erfährt und somit die Schweißqualität verbessert wird. Weiterhin bietet die vorliegende Erfindung ebenfalls aufgrund der vorteilhaften Ausgestaltung der Halteeinrichtung die Möglichkeit eine Leichtbaugestaltung zu realisieren.

Gemäß einer bevorzugten Ausführungsform der vorliegenden Erfindung ist die Halteeinrichtung derart gestaltet, dass sie die Achseneinrichtung auf beiden Seiten der Schweißdrahtbevorratungseinrichtung in definierten Lagersitzen aufnimmt, wenn die Schweißdrahtbevorratungseinrichtung mit der Schweißvorrichtung gekoppelt ist.

Diese Ausführungsform ist vorteilhaft, da durch die mehreren Lagersitze die Schweißdrahtbevorratungseinrichtung äußerst präzise und stabil gehalten wird. Die Ausrichtung der Schweißdrahtbevorratungseinrichtung ist somit immer sichergestellt, wodurch eine äußerst gleichförmige bzw. homogene Zuführung des auf der Schweißdrahtbevorratungseinrichtung vorgehaltenen länglichen Materials, insbesondere des Schweißdrahtes, zum Schweißkopf bewirkbar ist.

Der Rahmenteil ist gemäß einer weiteren bevorzugten Ausführungsform der vorliegenden Ausführungsform derart gestaltet oder derart mit Positioniermitteln versehen, dass eine Schweißdrahtbevorratungseinrichtung in einem entkoppelten Zustand derart gegenüber der Halteeinrichtung ausgerichtet bzw. positioniert ist, dass durch die Einbringung der Achseneinrichtung eine Überführung der Schweißdrahtbevorratungseinrichtung aus dem entkoppelten Zustand in einen gekoppelten Zustand erfolgt. Diese Ausführungsform ist vorteilhaft, da die Montage der Schweißdrahtbevorratungseinrichtung für eine Person deutlich erleichtert ist. Die Person braucht die schwere Schweißdrahtbevorratungseinrichtung nicht frei zu halten, wozu sie stets zwei Hände benötigen würde, sondern kann zunächst die Schweißdrahtbevorratungseinrichtung in eine Ausgangsposition bringen und dann durch das Bewegen der Achseneinrichtung die Schweißdrahtbevorratungseinrichtung in einen gekoppelten Zustand überführen. Die Bewegung der Achseinrichtung und somit die Montage der Schweißdrahtbevorratungseinrichtung kann durch diese Lösung besonders bevorzugt einhändig durchgeführt werden, was eine enorme Vereinfachung, Zeitersparnis, Kostenersparnis und Risikoreduzierung bewirkt.

Die Fixiereinrichtung umfasst gemäß der vorliegenden Erfindung ein erstes achsenseitiges Fixiermittel und ein zweites Fixiermittel, wobei das zweite Fixiermittel an einem Lagersitz oder im Bereich eines Lagersitzes der Halteeinrichtung angeordnet oder ausgebildet ist, wobei das erste Fixiermittel und das zweite Fixiermittel in Abhängigkeit einer mittels des Bedienelements bewirkbaren Rotation der Achseneinrichtung um ihre Längsachse und somit einer Rotation des ersten Fixiermittels um die Längsachse der Achseneinrichtung eine Arretierung der Achseneinrichtung gegenüber der Halteeinrichtung bewirkt. Diese Ausführungsform ist vorteilhaft, da keine aufwendigen Fixierschritte, insbesondere kein zeitaufwendiges Verschrauben, durchgeführt werden müssen und die Fixierung der Schweißdrahtbevorratungseinrichtung äußerst einfach vornehmbar ist. Die Fixierung der Schweißdrahtbevorratungseinrichtung kann somit ebenfalls von fachfremden Personen unmittelbar, sicher und schnell bewirkt werden.

Gemäß der vorliegenden Erfindung ist eine Bremseinrichtung zum Verlangsamen der Rotationsbewegung der Schweißdrahtbevorratungseinrichtung vorgesehen, wobei die Bremseinrichtung zumindest ein unkontrolliertes Abwickeln eines auf der Schweißdrahtbevorratungseinrichtung vorgehaltenen Schweißdrahtes verhindert. Diese Ausführungsform ist vorteilhaft, da das unerwünschte Abrollen einer Schweißdrahtbevorratungseinrichtung verhindert wird, das sonst dazu führen würde, dass ein Verklemmen des Drahtes im System erfolgt oder dass die Schweißdrahtbevorratungseinrichtung nicht wieder verwendbar ist, wodurch Mehrkosten für den Ersatz des auf der Schweißdrahtbevorratungseinrichtung vorgehaltenen Drahtes entstehen oder die Qualität der Wicklung des Drahtes auf der Schweißdrahtbevorratungseinrichtung reduziert ist, woraus eine Beeinträchtigung des Schweißergebnisses resultieren kann. Besonders bevorzugt kann die Fixierung der Schweißdrahtbevorratungseinrichtung einhändig erfolgen.

Die Bremseinrichtung ist gemäß einer weiteren bevorzugten Ausführungsform der vorliegenden Erfindung derart als Teil der Achseneinrichtung ausgebildet, dass eine Bewegung der Achseneinrichtung infolge einer Bedienung des Bedienelements bevorzugt unmittelbar eine Bewegung, insbesondere eine Verschiebung in axialer Richtung, der Bremseinrichtung bewirkt. Die Bremseinrichtung ist als Teil der Achseneinrichtung ausgebildet, wodurch eine sehr platzsparende und leichte Ausgestaltung geschaffen ist. Weiterhin weist die Bremseinrichtung gemäß einer weiteren bevorzugten Ausführungsform ein Kopplungselement zum formschlüssigen Koppeln mit einem dazu zumindest teilweise negativ ausgebildeten Verbindungselement der Schweißdrahtbevorratungseinrichtung auf. Diese Ausführungsform ist vorteilhaft, da das Kopplungselement bevorzugt derart ausgestaltet ist, dass es beim Anbringen der Schweißdrahtbevorratungseinrichtung, d.h. zeitgleich zum Verfahren der Achseneinrichtung, an der Halteeinrichtung bevorzugt selbsttätig in Eingriff kommt und somit selbsttätig eine Kopplung zwischen der Bremse und der Schweißdrahtbevorratungseinrichtung erzeugt.

Gemäß der vorliegenden Erfindung stellt die Achseneinrichtung eine Baugruppe dar, die eine Achse, an der ein erster Achsenlagersitz und ein zweiter Achsenlagersitz zur Positionierung in oder an der Halteeinrichtung ausgebildet sind, ein erstes Fixiermittel zum Zusammenwirken mit einem im Bereich der Halteeinrichtung ausgebildeten zweiten Fixiermittel, eine Bremseinrichtung zum Reduzieren der Rotationsgeschwindigkeit der Schweißdrahtbevorratungseinrichtung und ein Bedienelement zum manuellen Positionieren sowie Rotieren der Achseneinrichtung aufweist. Diese Ausführungsform ist vorteilhaft, da mittels eines Bewegungsablaufs, wie z.B. Einführen der Achseneinrichtung in die Lagerstellen zum Positionieren der Schweißdrahtbevorratungseinrichtung eine Fixierung und/oder Positionierung der Schweißdrahtbevorratungseinrichtung und eine Kopplung mit der Bremse bewirkbar ist. Diese Funktionsintegration ermöglicht einen sehr schnellen und einfachen Austausch von Schweißdrahtbevorratungseinrichtungen.

Die Bremseinrichtung ist gemäß einer weiteren bevorzugten Ausführungsform der vorliegenden Erfindung derart an dem Rahmenteil oder der Halterung angeordnet, dass infolge des Ankoppelns der Schweißdrahtbevorratungseinrichtung eine Wirkverbindung zwischen der Schweißdrahtbevorratungseinrichtung und der Bremseinrichtung erzeugbar ist. Diese Ausführungsform ist vorteilhaft, da unabhängig von der Stellung bzw. Position der Achseneinrichtung die Bremseinrichtung zugänglich und somit überwachbar und/oder konfigurierbar ist.

Einzelne oder alle Darstellungen der im Nachfolgenden beschriebenen Figuren sind bevorzugt als Konstruktionszeichnungen anzusehen, d.h. die sich aus der bzw. den Figuren ergebenden Abmessungen, Proportionen, Funktionszusammenhänge und/oder Anordnungen entsprechen bevorzugt genau oder bevorzugt im Wesentlichen denen der erfindungsgemäßen Vorrichtung bzw. des erfindungsgemäßen Produkts.

Weitere Vorteile, Ziele und Eigenschaften vorliegender Erfindung werden anhand nachfolgender Beschreibung anliegender Zeichnungen erläutert, in welchen beispielhaft erfindungsgemäße Verbindungsvorrichtungen dargestellt sind. Elemente der erfindungsgemäßen Vorrichtungen, welche in den Figuren wenigsten im Wesentlichen hinsichtlich ihrer Funktion übereinstimmen, können hierbei mit gleichen Bezugszeichen gekennzeichnet sein, wobei diese Bauteile bzw. Elemente nicht in allen Figuren beziffert oder erläutert sein müssen. Nachfolgend wird die Erfindung rein beispielhaft anhand der beigefügten Figuren beschrieben.

Darin zeigen:
- Fig. 1a: eine erste Seitenansicht der erfindungsgemäßen Schweißvorrichtung aus einer orthogonal zur axialen Richtung stehenden Richtung;
- Fig. 1b: eine zweite Seitenansicht aus einer der Richtung der ersten Seitenansicht entgegenstehenden Richtung;
- Fig. 2a: eine Draufsicht auf eine erfindungsgemäße Schweißvorrichtung in einer Gebrauchssituation;
- Fig. 2b: eine teilweise Darstellung der in Fig. 2a gezeigten Anordnung in einer Seitenansicht;
- Fig. 3a: eine Seitenansicht der Schweißdrahtbevorratungseinrichtung in einem mit der Halteeinrichtung gekoppelten Zustand;
- Fig. 3b: eine weitere Seitenansicht der Schweißdrahtbevorratungseinrichtung in einem mit der Halteeinrichtung gekoppelten Zustand aus einer gegenüber Fig. 3a gegensätzlichen Richtung;
- Fig. 4: eine perspektivische Darstellung einer Schweißdrahtbevorratungseinrichtung, einer Achseneinrichtung und einer Halteeinrichtung in einem nicht gekoppelten Zustand;
- Fig. 5: eine Schnittdarstellung einer Achseneinrichtung;
- Fig. 6a/b: perspektivische Ansichten der Achseneinrichtung;
- Fig. 7a-d: verschiedene Ansichten des ersten Lagersitzes der Halteeinrichtung.

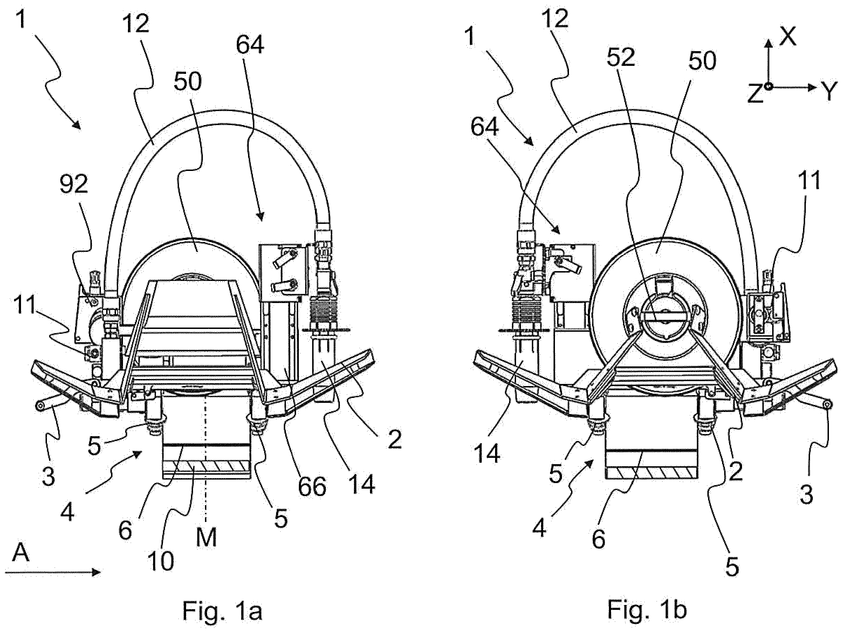

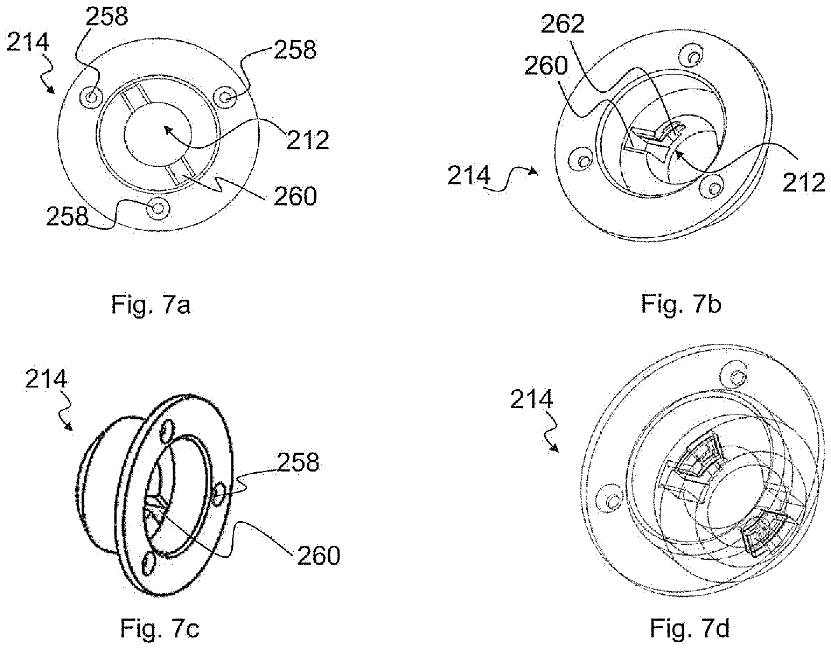

In Fig. 1a ist eine erste Seitenansicht einer erfindungsgemäßen Orbitaischweißvorrichtung 1 gezeigt. Die Orbitalschweißvorrichtung 1 weist dabei ein Rahmenteil 2 zum Anordnen einer oder mehrerer Funktionseinrichtungen auf. Weiterhin umfasst die Orbitalschweißvorrichtung 1 einen Kopplungsbereich 4 zum Ankoppeln an ein Führungsband 6. Der Kopplungsbereich 4 ist bevorzugt mit Führungselementen bzw. Kopplungselementen 5 ausgestattet, die bevorzugt zum Erzeugen eines Formschlusses zur Reduzierung der Bewegungsfreiheitsgrade der Orbitalschweißvorrichtung 1 vorgesehen sind. Die Orbitalschweißvorrichtung 1 ist, wenn sie mit dem Führungsband 6 gekoppelt ist, bevorzugt lediglich in der durch das Führungsband 6 ausgebildeten Umfangsrichtung U um ein Rohr 10 (vgl, Fig. 7a) herumführbar. Die Kopplungselemente 5 reduzieren bzw. begrenzen bzw. verhindern bevorzugt im Wesentlichen und besonders bevorzugt vollständig eine Relativbewegung der Schweißvorrichtung 1 gegenüber dem Führungsband 6 in axialer Richtung A und/oder in radialer Richtung. Somit ist das Führungsband 6 in einem Betriebszustand bevorzugt an dem Rohr 10 befestigt bzw. das Führungsband 6 umschließt das Rohr 10 in Umfangsrichtung U und erstreckt sich in axialer Richtung A des Rohres 10, wobei es dabei das Rohr 10 abschnittsweise überlagert. Das Führungsband 6 wird dabei bevorzugt an das Rohr 10 lösbar angekoppelt, insbesondere angepresst, angeschraubt und/oder angeheftet.

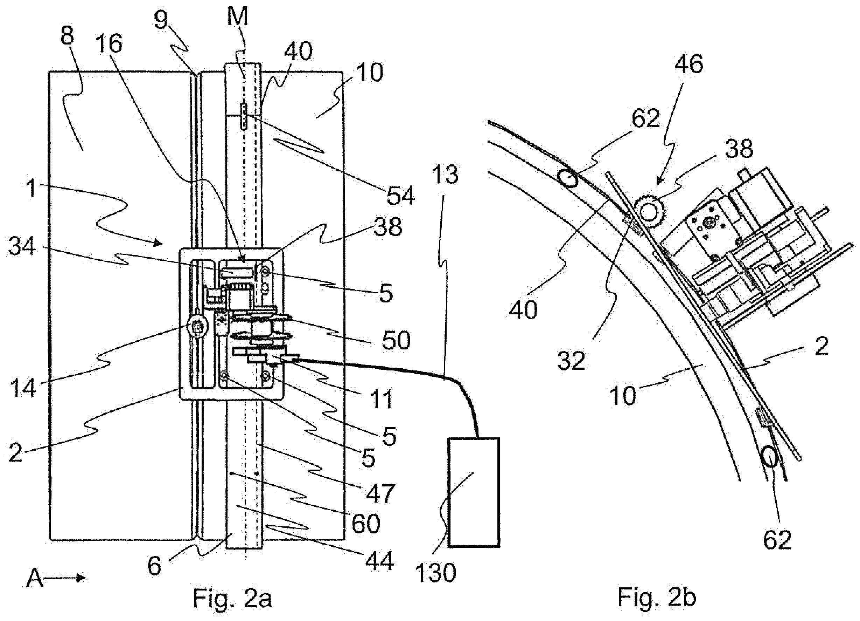

Weiterhin ist in Fig. 1a eine Anschlusseinrichtung 11 zum Anschließen von mindestens einer Zuführleitung 12 gezeigt. Die Anschlusseinrichtung 11 dient dabei bevorzugt zur Anbindung einer oder mehrerer Betriebsmittelquellen an die Schweißvorrichtung 1. Als Betriebsmittelquelle kann hierbei neben anderem eine Gasquelle und/oder eine Signalquelle und/oder eine Stromquelle angesehen werden. Die Anschlusseinrichtung 11 weist bevorzugt einen Gasanschluss zur Anbindung einer Versorgungsleitung 13 (vgl. Fig. 2a) auf. Das der Anschlusseinrichtung 11 zugeführte Gas ist über eine Zuführleitung 12 einem Schweißkopf 14 zum Ermöglichen eines Schweißprozesses zuführbar, wobei die Anschlusseinrichtung 11 über die Zuführleitung 12 mit dem Schweißkopf 14 funktional verbunden ist. Ferner ist in die Drahtvorschubeinrichtung 92 ein kabel- oder bandartiges Endlosmaterial, insbesondere ein Schweißdraht, einbringbar, das auf einer an der Orbitalschweißvorrichtung 1 angebrachten Spule 50 vorhaltbar ist. Das Endlosmaterial ist über eine weitere an der Drahtvorschubeinrichtung 92 anbringbare Leitung (nicht gezeigt) ebenfalls dem Schweißkopf 14 zuführbar.

Das Bezugszeichen 64 kennzeichnet ferner ein Zustellmittel, mittels dem der Schweißkopf 14 zumindest in der vertikalen und/oder horizontalen Richtung verfahrbar ist. Bevorzugt ist über das Zustellmittel 64 eine bevorzugte Stellung des Schweißkopfes 14 einstellbar und arretierbar. Es ist weiterhin denkbar, dass das Zustellmittel 64 einen, zwei, drei oder mehrere Motoren zum Bewirken der einzelnen Verfahrbewegungen des Schweißkopfes 14 aufweist. Bevorzugt weist das Zustellmittel 64 zwei Linearmotoren 66, 68 (vgl. Fig. 2a) zum Bewirken der Verfahrbewegungen auf, wobei ein erster Linearmotor 66 im Wesentlichen oder genau in vertikaler Richtung orientiert bzw. ausgerichtet ist und ein zweiter Linearmotor 68 im Wesentlichen oder genau in horizontaler Richtung orientiert bzw. ausgerichtet ist.

In Fig. 1b ist eine gegenüber der in Fig. 1 a gezeigten ersten Seitenansicht weitere zweite Seitenansicht dargestellt. Die erste Seitenansicht und die zweite Seitenansicht sind dabei Ansichten aus einander gegenüberliegenden Richtungen. Die Spule 50 ist gemäß der in Fig. 1b gezeigten Darstellung über ein Aufnahmemittel 52, das bevorzugt eine herausnehmbare Achse darstellt, die mit einer Bremse gekoppelt ist, am Rahmen bzw. Rahmenteil 2 abgestützt bzw. gegenüber dem Rahmen 2 ortsfest angeordnet.

Weiterhin lässt sich der Fig. 1b ein Koordinatensystem entnehmen, das eine erste Richtung X, eine zweite Richtung Y und eine dritte Richtung Z definiert. Die erste Richtung X entspricht hierbei bevorzugt der vertikalen Richtung, die zweite Richtung Y entspricht hierbei bevorzugt der Breitenrichtung und die dritte Richtung entspricht bevorzugt einer Tiefenrichtung der Vorrichtung. In Y-Richtung erstreckt sich bevorzugt auch stets die axiale Richtung A (vgl. Fig. 1a). Weiterhin spannen die Richtungen Y und Z bevorzugt eine horizontale Ebene auf. In Fig. 2a ist eine Anordnung gezeigt, wie sie beim Einsatz der erfindungsgemäßen Orbitalschweißvorrichtung 1 möglich ist. Beim Verbinden von Rohren 8, 10, insbesondere gasführenden Rohren, wird zunächst ein erstes Rohr 8 bereitgestellt, dann wird ein zweites Rohr 10 bereitgestellt, das mit dem ersten Rohr 8 verbunden werden soll. Weiterhin wird ein Führungsband 6 an dem ersten Rohr 8 und/oder dem zweiten Rohr 10 angeordnet, wobei das Führungsband 6 die Ankopplung einer Orbitalschweißvorrichtung 1 ermöglicht. Die Orbitaischweißvorrichtung 1 weist dabei bevorzugt mindestens eine Antriebseinrichtung 16 auf, wobei die Antriebseinrichtung 16 zum Bewegen der Orbitalschweißvorrichtung 1 gegenüber dem Führungsband 6 mit dem Führungsband 6 zusammenwirkt. Die Antriebseinrichtung 16 ist gegenüber einem Rahmenteil 2 der Orbitalschweißvorrichtung 1 in unterschiedlichen Stellungen und somit Positionen und Orientierungen anordenbar. Beim Bewegen der Orbitalschweißvorrichtung 1 in Umfangsrichtung U der Rohre 8, 10 entlang dem Führungsband 6 erfolgt bevorzugt ein Verbinden der Rohre 8, 10 durch eine Behandlung eines Verbindungsbereichs 9 mit einer Verbindungseinrichtung 14 der Verbindungsvorrichtung 1. Der Buchstabe M kennzeichnet eine Linie, welche in der axialen Richtung A die Mitte bzw. die axiale Mitte des Führungsbandes 6 darstellt. Einerseits oder beiderseits der axialen Mitte M weist das Führungsband 6 eine Negativstruktur 47 auf. Die Negativstruktur 47 ist dabei bevorzugt im Wesentlichen und besonders bevorzugt genau negativ zur umlaufenden Form eines Antriebsrads 38 der Antriebseinrichtung 16 ausgebildet.

Das Führungsband 6 weist bevorzugt Fixiermittel 60, insbesondere Bohrungen, zur Anbringung von Beabstandungsmittel 62 auf. Weiterhin weist das Führungsband 6 bevorzugt eine Spanneinrichtung 54 zur Anpassung des Radius des Führungsbandes 6 auf. Das Führungsband 6 ist somit mittels der Spanneinrichtung 54 an das Rohr 10 anpressbar bzw. an die zwischen dem Rohr 10 und dem Führungsband 6 angeordneten Beabstandungsmittel 62 anpressbar.

Ferner kennzeichnet das Bezugszeichen 130 eine Quelle, insbesondere eine Quelle für Betriebsmittel. Es ist hierbei jedoch ebenfalls denkbar, dass zwei, drei, vier, fünf, oder mehrere Quellen vorgesehen sind und die einzelnen Quellen 130 über einzelne oder gemeinsame Versorgungsleitungen mit der erfindungsgemäßen Schweißvorrichtung 1 verbunden sind. Eine Quelle 130 kann dabei z.B. zur Bereitstellung von Strom, Gas, einer Flüssigkeit und/oder Signalen und/oder anderen Stoffen dienen.

In Fig. 2b sind einzelne der in Fig. 2a gezeigten Komponenten ausschnittsweise in einer Seitenansicht gezeigt. Es ist dieser Darstellung zu entnehmen, dass das Antriebsrad 38 der Antriebseinrichtung 16 auf der sich axial erstreckenden Oberfläche des Führungsbandes 6 mit dem Führungsband 6 in Eingriff befindet. Weiterhin kennzeichnet das Bezugszeichen 40 die Stirnseite des Führungsbandes 6.

Zwischen dem zweiten Rohr 10 und dem Führungsband 6 sind zudem mehrere Beabstandungsmittel 62 angeordnet.

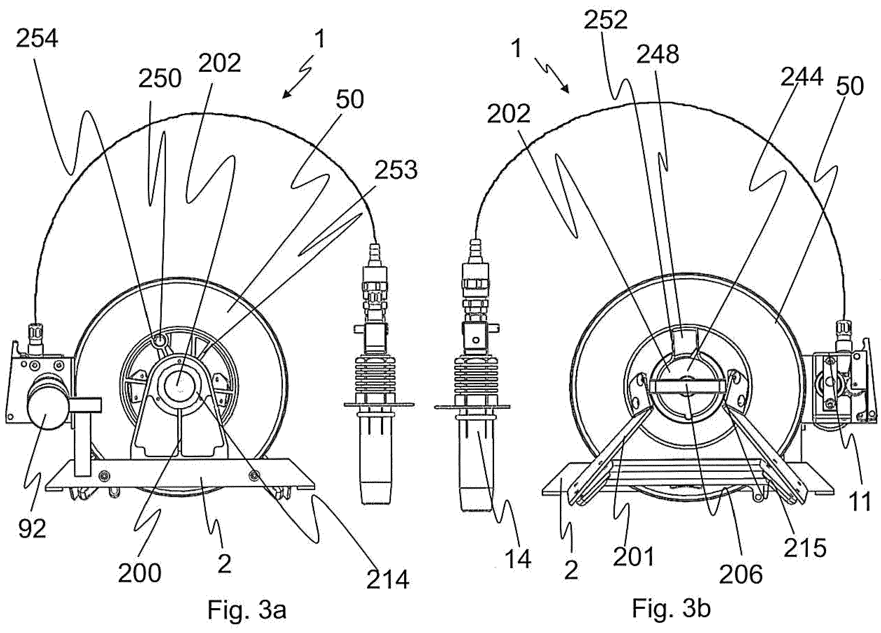

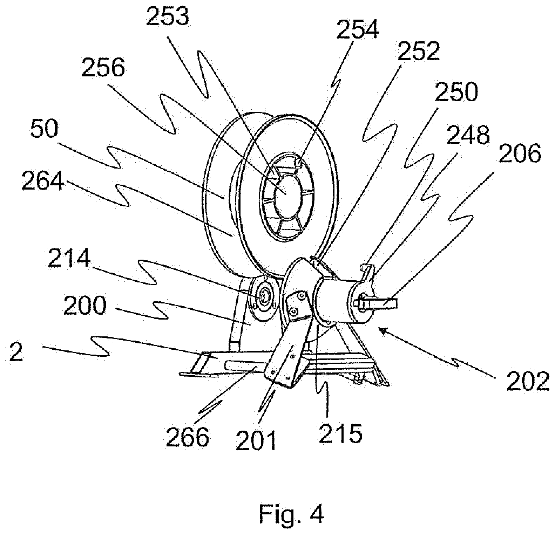

In Fig. 3a ist eine Seitenansicht eines Teils der erfindungsgemäßen Orbitaischweißvorrichtung 1 gezeigt. Dieser Darstellung lässt sich entnehmen, dass die Spule 50 bzw. die Schweißdrahtbevorratungseinrichtung 50 über eine erste Halteeinrichtung 200 gegenüber dem Rahmenteil 2 gehalten wird. Die erste Halteeinrichtung 200 bildet dabei einen ersten Lagersitz 214 aus, der zur Aufnahme der Achseneinrichtung 202 ausgestaltet ist und ein Fixiermittel 212 (vgl. Fig. 7a-7b) umfasst. Die Halteeinrichtung 200, 201 ist bevorzugt derart gestaltet, dass sie für die Spule 50 eine definierte Position vorgibt. Die Ausrichtung der Spule 50 in der definierten Position wird insbesondere durch ein oder zwei Positionierelement/e 266 bzw. eine Positionier-/Ausrichthilfe, die bevorzugt zapfenförmig oder strebenförmig an der ersten Halteeinrichtung 200 und/oder an der zweiten Halteeinrichtung 201 ausgebildet bzw. angeordnet ist/sind, bewirkt. Bevorzugt sind zwei Positionierelemente 266 derart zueinander angeordnet bzw. beabstandet, dass die Spule 50 definiert daran zum Liegen kommt, wodurch die Durchgangsöffnung 256 in zum Koppeln mit der Achseneinrichtung 202 geeigneter Weise zwischen den Lagersitzen 214, 215 angeordnet bzw. ausgerichtet wird. Die Spule 50 kann dabei bevorzugt in die Halteeinrichtung 200, 201 fallen und wird selbsttätig in eine definierte Position überführt. Weiterhin kennzeichnet das Bezugszeichen 92 eine Antriebseinrichtung, insbesondere zum Bewirken eines Drahtvorschubs. Die Spule 50 weist zum einen einen oberen Kabelaufnahmeanteil 264 (vgl. Fig. 4) und eine untere zu einer Drehachse hin zumindest teilweise ausgebildete Haltestruktur 253 auf. Die Haltestruktur 253 weist bevorzugt eine oder mehrere Verbindungsstellen 254 zum Verbinden mit mindestens einem an der Achseneinrichtung 202 ausgebildeten Verbindungselement bzw. Zapfen 250 auf.

In Fig. 3b ist die erfindungsgemäße Orbitalschweißvorrichtung 1 ebenfalls in einer Seitenansicht dargestellt, wobei die hier dargestellte Ansicht die Vorrichtung aus der entgegen der in Fig. 3a gezeigten Blickrichtung zeigt. Es lässt sich dieser Darstellung entnehmen, dass die Achseneinrichtung 202 diesseits der Spule 50 in einem Lagersitz 215 gehalten wird, der von einer zweiten Halteeinrichtung 201 gehalten wird. Die Achseneinrichtung 202 weist gemäß dieser Darstellung ein als Griff ausgebildetes Bedienelement 206 auf. Weiterhin ist an der Achseneinrichtung 202 bevorzugt ein Arm 248 bzw. ein Ausleger bzw. ein Vorsprung angeordnet oder ausgebildet, der sich bevorzugt in radialer Richtung erstreckt. Der Arm 248 ist bevorzugt an einer Endkappe 244 der Spulenachse ausgebildet. Weiterhin weist der an der zweiten Halteeinrichtung 201 ausgebildete zweite Lagersitz 215 und/oder die zweite Halteeinrichtung 201 eine Ausnehmung 252 zum Aufnehmen des Arms 248 auf.

In Fig. 4 ist eine perspektivische Darstellung eines Teil des erfindungsgemäßen Orbitalschweißvorrichtung 1 gezeigt. Die Darstellung zeigt hierbei die Anordnung der einzelnen Komponenten bei der Demontage bzw. einem Austausch der Spule 50. Es ist hierbei der Fig. 4 zu entnehmen, dass an dem Rahmenteil 2 eine ersten Halteeinrichtung 200 vorgesehen ist, an der ein erster Lagersitz 214 zum Aufnehmen eines ersten Endes der Achseneinrichtung 202 angeordnet ist. Weiterhin ist gezeigt, dass eine zweite Halteeinrichtung 201 an dem Rahmenteil 2 angeordnet ist, die einen zweiten Lagersitz 215 zum Aufnehmen eines von dem ersten Ende der Achseneinrichtung 202 beabstandeten zweiten Ende der Achseneinrichtung 202 ausbildet. Die Spule 50 ist in dem Einbauzustand bevorzugt derart ausgerichtet, dass die sich in der Durchgangsöffnung 256 erstreckende Rotationsachse, um welche die Spule 50 rotierbar ist, in einer bevorzugt im Wesentlichen und besonders bevorzugt genau horizontalen Ebene erstreckt. Es handelt sich bei der Spule 50 bevorzugt um eine stehende Spule. Die Spule 50 wird dabei bevorzugt seitlich und besonders bevorzugt von oben in die Halteeinrichtung 200, 201 eingesetzt. Das Einsetzen der Spule 50 in die Halteeinrichtung 200, 201 ist dabei besonders bevorzugt einhändig möglich.

Weiterhin muss durch die Lage bzw. Ausrichtung der Spule 50 der Draht bevorzugt nur um eine Achse verwunden werden, wodurch weniger Probleme bei der Lichtbogenstabilität und somit eine bessere Schweißqualität resultiert.

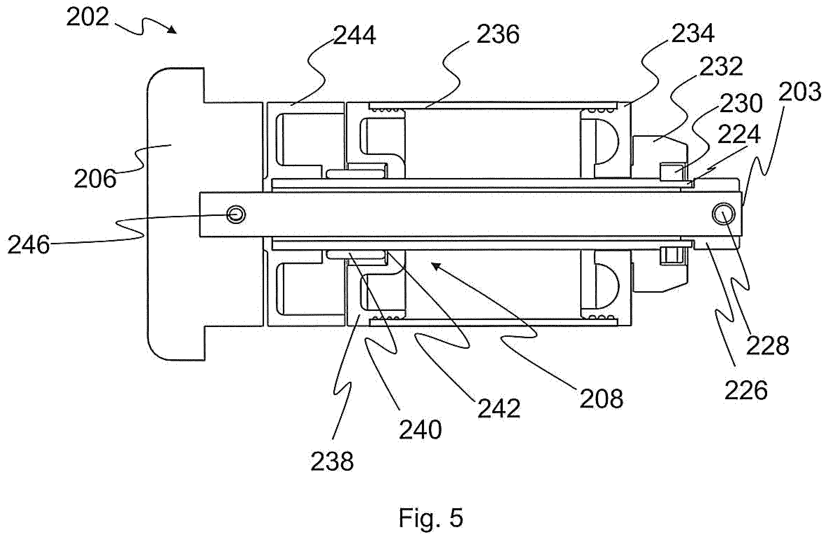

In Fig. 5 ist eine Achseneinrichtung 202 als Baugruppe aus mehreren Elementen bzw. Einrichtungen dargestellt. Die Achseneinrichtung 202 umfasst eine Achse 203, eine Bremseinrichtung 208 und ein Bedienelement 206. Weiterhin lässt sich der Fig. 5 entnehmen, dass die Bremseinrichtung 208 bevorzugt eine Druckscheibe 240 und/oder eine Druckfeder 242 aufweist, wobei die Druckscheibe 240 und/oder die Druckfeder 242 bevorzugt zwischen einer Mitnehmerplatte 238 und einem Spulenhalter 224 angeordnet sind. Die Mitnehmerplatte 238 wird bevorzugt teilweise in axialer Richtung von einem Spulenrohr 236 überlagert, wobei das Spulenrohr 236 bevorzugt ebenfalls zumindest teilweise einen Deckel 234 überlagert. Das Spulenrohr 236 wird somit besonders bevorzugt einerseits durch einen Deckel 234 und andererseits durch eine Mitnehmerplatte 238 abgeschlossen. An den Deckel 234 schließt sich bevorzugt in radialer Richtung die Achse 203 und den Spulenhalter 224 überlagernd ein Gegenflansch 232 an. Der Gegenflansch 232 wird bevorzugt durch einen Stellring 230 in seiner Position relativ zur Achse 203 gehalten. Am vom Bedienelement 206 beabstandeten weiteren Ende der Achseneinrichtung 202 weist die Achse 203 bevorzugt eine Spulenverriegelung bzw. ein Endlager 226 auf. Das Endlager 226 wird dabei besonders bevorzugt durch ein achsenseitiges Kopplungsmittel 228, das bevorzugt als Passstift ausgeführt ist, an der Achse 203 gehalten. Es ist hierbei jedoch ebenfalls denkbar, dass das Endlager 226 unlösbar mit der Achse 203 gekoppelt ist. Der Passstift 228 kann als erstes achsenseitiges Fixiermittel 210 verstanden werden, das mit einem zweiten Fixiermittel 212, das im Bereich der ersten Halteeinrichtung 200 ausgebildet bzw. angeordnet ist (vgl. Fig. 7a-7d), zum Fixieren bzw. Arretieren der Position und/oder der Ausrichtung der Achseneinrichtung 202 dient.

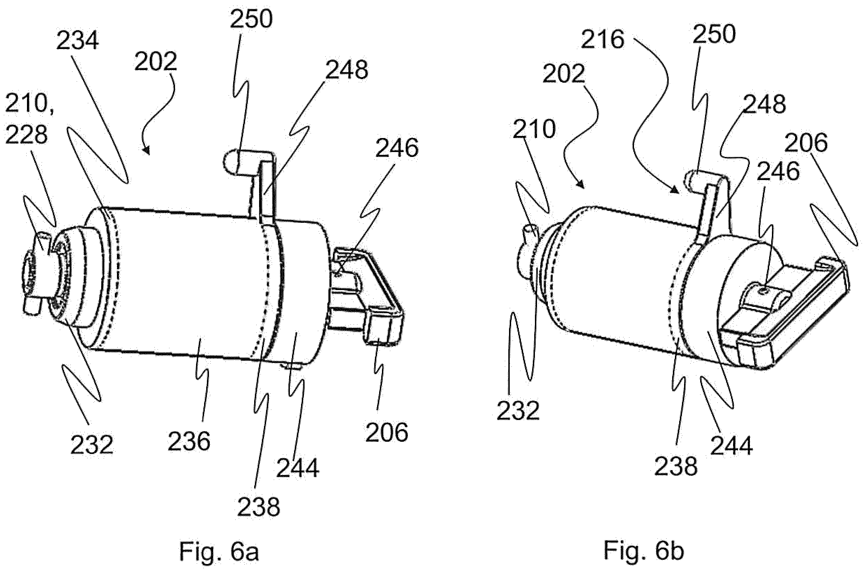

In den Figuren 6a und 6b sind zwei perspektivische Darstellungen der Achseneinrichtung 202 gezeigt. Die Achseneinrichtung 202 weist demnach an einem Ende ein erstes Fixiermittel 210, das bevorzugt als Passstift 228 ausgebildet ist, auf. In axialer Richtung schließt sich an das erste Fixiermittel 210 ein Gegenflansch 232 an, der wiederum über einen Deckel 234 mit einem Spulenrohr 236 in Kontakt steht. Das Spulenrohr 236 ist ferner mit einer Mitnehmerplatte 238 gekoppelt, an welcher der Arm 248 mit der Nase 250 angeordnet ist. Axial schließt sich an der Mitnehmerplatte 238 zu einem weiteren Ende der Achse 203 hin eine Endkappe 244 an, die von einem mittels einem Spannstift 246 an die Achse 203 angekoppelten Bedienelement 206 axial zumindest teilweise überlagert wird.

Die Achse bzw. Achseneinrichtung 202 wird bevorzugt samt Bremseinrichtung 208 durch die Spulenhalterung 201 und die Durchgangsöffnung 256 (vgl. Fig. 4) der Spule 50 hindurch geschoben und verriegelt. Die Achseneinrichtung 202 kann dabei komplett entnehmbar sein oder in einer Endposition gehalten werden.

Die Achseneinrichtung 202 wird mittels der Betätigungseinrichtung 206 mit einer Drehung von 10°-350°, und bevorzugt von 10°-180° und besonders bevorzugt von 10°-90° bzw. von im Wesentlichen oder genau ca. 30° verschlossen und geöffnet. Die Fixiereinrichtung kann hierbei z.B. als eine Art Bajonettverschluss ausgebildet sein, wobei durch das Zusammenwirken des ersten Fixiermittels 210 und des zweite Fixiermittels 212 die Verschlusswirkung erzielt wird.

In den Figuren 7a-7d sind verschiedene Darstellungen des an dem ersten Lagersitz 214 an der ersten Halteeinrichtung 200 angeordneten bzw. ausgebildeten zweiten Fixiermittels 212 gezeigt. Fig. 7a lässt sich entnehmen, dass der Lagersitz 214 z.B. mittels mehrerer Schrauben, insbesondere mittels zwei, drei, vier oder mehr Schrauben 258 an der ersten Halteeinrichtung 200 fixierbar ist. Die zweite Fixiereinrichtung 212, die zum Zusammenwirken mit der achsenseitigen ersten Fixiereinrichtung 210 ausgebildet ist, weist bevorzugt eine oder zwei Vertiefungen 260 auf. Die Anzahl der Vertiefungen 260 ist dabei bevorzugt von der Anzahl an Passstiften 228 abhängig, die an der Achseneinrichtung 202 als erste Fixiermittel 210 ausgebildet sind, wobei jedoch zusätzlich oder alternativ denkbar ist, dass mehr Vertiefungen 260 als Passstifte 228 vorgesehen sind. Weiterhin lässt sich der Fig. 7b entnehmen, dass sich an die Vertiefung/en 260 je eine Fixierstelle 262 anschließt, wobei die Achseneinrichtung 202 mittels dem Bedienelement 206 derart rotierbar ist, dass die Passstifte 228 der Achseneinrichtung 202 in eine formschlüssige und/oder reibschlüssige Verbindung mit dem zweiten Fixiermittel 212 überführbar sind.

### Bezugszeichenliste

- 1: Orbitalschweißvorrichtung
- 2: Rahmenteil
- 3: Betätigungselement
- 4: Kopplungsbereich
- 5: Kopplungselement
- 6: Führungsband
- 8: erstes Rohr
- 9: Verbindungbereich
- 10: zweites Rohr
- 11: Anschlusseinrichtung
- 12: Zuführleitung
- 13: Versorgungsleitung
- 14: Schweißkopf
- 16: Antriebseinrichtung
- 38: Antriebsrad
- 40: Stirnseite
- 44: Umfangsfläche
- 46: Flächenantrieb
- 47: Negativstruktur
- 50: Spule
- 52: Aufnahmemittel
- 54: Spanneinrichtung
- 60: Fixiermittel
- 62: Beabstandungsmittel
- 64: Zustellmittel
- 66: erster Linearmotor
- 68: zweiter Linearmotor
- 92: Drahtvorschub
- 130: Quelle
- 200: erste Halteeinrichtung
- 201: zweite Halteeinrichtung
- 202: Achseneinrichtung
- 203: Achse
- 206: Bedienelement
- 208: Bremseinrichtung
- 210: erstes Fixiermittel
- 212: zweites Fixiermittel
- 214: erster Lagersitz an der Halteeinrichtung
- 215: zweiter Lagersitz an der Halteeinrichtung
- 216: Kopplungselement
- 224: Spulenhalter
- 226: Spulenverriegelung/ Endlager
- 228: achsenseitiges Kopplungsmittel (Passstift)
- 230: Stellring
- 232: Spulenrohr/ Gegenflansch
- 234: Spulenrohr/ Deckel
- 236: Spulenrohr
- 238: Mitnehmerplatte
- 240: Druckscheibe Spulenbremse
- 242: Druckfeder Spulenbremse
- 244: Endkappe Spulenachse
- 246: Spannstift
- 248: Arm
- 250: Zapfen
- 252: Ausnehmung
- 253: Haltestruktur
- 254: Verbindungsstelle
- 256: Durchgangsöffnung
- 258: Bohrung
- 260: Vertiefung
- 262: Fixierungsstellung
- 264: Kabelaufnahmeanteil
- 266: Positionierelement

- A: axiale Richtung
- M: axiale Mitte
- R: Rotationsachse
- U: Umfangsrichtung
- X: erste Richtung
- Y: zweite Richtung
- Z: dritte Richtung

## Patentansprüche

1. Orbitalschweißvorrichtung (1),
mindestens umfassend
ein Rahmenteil (2) zum Anordnen einer oder mehrerer Funktionseinrichtungen,
einen Kopplungsbereich (4) zum Ankoppeln an ein Führungsband (6),
wobei in einem Betriebszustand das Führungsband (6) bevorzugt an einem Rohr (8) befestigt ist, das Führungsband (6) das Rohr (10) in Umfangsrichtung (U) umschließt und
sich das Führungsband (6) in axialer Richtung (A) erstreckt, wobei es dabei das Rohr (10) abschnittsweise überlagert,
eine Anschlusseinrichtung (11) zum Anschließen von mindestens einer Zuführleitung (12),
ein mit der Anschlusseinrichtung (11) über die Zuführleitung (12) verbundener Schweißkopf (14),
mindestens eine Antriebseinrichtung (16), wobei die Antriebseinrichtung (16) zum Bewegen der Schweißvorrichtung (1) gegenüber dem Führungsband (6) mit dem Führungsband (6) zusammenwirkt, und
eine am Rahmenteil (2) angeordnete Halteeinrichtung (200), eine Fixiereinrichtung und eine Achseneinrichtung (202),wobei die Halteeinrichtung (200) einen Lagersitz (214) aufweist
wobei die Achseneinrichtung (202) zum Aufnehmen einer Schweißdrahtbevorratungseinrichtung (50) ausgebildet ist, wobei die Achseneinrichtung (202) die Schweißdrahtbevorratungseinrichtung (50) derart aufnimmt, dass sie zumindest zeitweise gegenüber dem Rahmenteil (2) drehbar ist, wobei
die Achseneinrichtung (202) mittels der Fixiereinrichtung gegenüber dem Rahmenteil (2) in mindestens einer Stellung arretierbar ist und die Achseneinrichtung ein Bedienelement (206) aufweist, **dadurch gekennzeichnet, dass**
die Fixiereinrichtung ein erstes achsenseitiges Fixiermittel (210) und ein zweites Fixiermittel (212) umfasst, wobei das zweite Fixiermittel (212) an dem Lagersitz (214) oder im Bereich des Lagersitzes (214) der Halteeinrichtung (200) angeordnet oder ausgebildet ist, wobei das erste Fixiermittel (210) und das zweite Fixiermittel (212) in Abhängigkeit einer mittels des Bedienelements (206) bewirkbaren Rotation der Achseneinrichtung (202) um ihre Längsachse und somit einer Rotation des ersten Fixiermittels (210) um die Längsachse der Achseneinrichtung (202) eine Arretierung der Achseneinrichtung (202) gegenüber der Halteeinrichtung (200) bewirkt
und
die Achseneinrichtung (202) eine Baugruppe darstellt, die eine Achse (203), an der ein erster Achsenlagersitz und ein zweiter Achsenlagersitz zur Positionierung in oder an der Halteeinrichtung (200) ausgebildet sind, ein erstes Fixiermittel (210) zum Zusammenwirken mit einem im Bereich der Halteeinrichtung (200) ausgebildeten zweiten Fixiermittel (212), eine Bremseinrichtung (208) zum Reduzieren der Rotationsgeschwindigkeit der Schweißdrahtbevorratungseinrichtung (50) und ein Bedienelement (206) zum manuellen Positionieren sowie Rotieren der Achseneinrichtung (202) aufweist.

2. Vorrichtung nach Anspruch 1,
**dadurch gekennzeichnet, dass**
die Halteeinrichtung (200, 201) derart gestaltet ist, dass sie die Achseneinrichtung (202) auf beiden Seiten der Schweißdrahtbevorratungseinrichtung (50) in definierten Lagersitzen aufnehmen kann, wenn die Schweißdrahtbevorratungseinrichtung (50) mit der Schweißvorrichtung (1) gekoppelt ist.

3. Vorrichtung nach Anspruch 2,
**dadurch gekennzeichnet, dass**
der Rahmenteil (2) derart gestaltet ist oder derart mit Positioniermitteln (214) versehen ist, dass eine Schweißdrahtbevorratungseinrichtung (50) in einem entkoppelten Zustand derart gegenüber der Halteeinrichtung (200) ausgerichtet ist, dass durch die Einbringung der Achseneinrichtung (202) in die definierten Lagersitze eine Überführung der Schweißdrahtbevorratungseinrichtung (50) aus dem entkoppelten Zustand in einen gekoppelten Zustand erfolgt.

4. Vorrichtung nach einem der vorangegangenen Ansprüche,
**dadurch gekennzeichnet, dass**
eine Bremseinrichtung (208) zum Verlangsamen der Rotationsbewegung der Schweißdrahtbevorratungseinrichtung (50) vorgesehen ist, wobei die Bremseinrichtung (208) zumindest ein unkontrolliertes Abwickeln eines auf der Schweißdrahtbevorratungseinrichtung vorgehaltenen Schweißdrahtes (50) verhindern kann.

5. Vorrichtung nach Anspruch 4,
**dadurch gekennzeichnet, dass**
die Bremseinrichtung (208) derart als Teil der Achseneinrichtung (202) ausgebildet ist, dass eine Bewegung der Achseneinrichtung (202) infolge einer Bedienung des Bedienelements (206) eine Bewegung der Bremseinrichtung (208) bewirken kann.

6. Vorrichtung nach Anspruch 4 oder Anspruch 5,
**dadurch gekennzeichnet, dass**
die Bremseinrichtung (208) ein Kopplungselement (216) zum formschlüssigen Koppeln mit einer dazu zumindest teilweise negativ ausgebildeten Verbindungsstelle (254) der Schweißdrahtbevorratungseinrichtung (50) aufweist.

7. Vorrichtung nach Anspruch 4,
**dadurch gekennzeichnet, dass**
die Bremseinrichtung (208) derart an dem Rahmenteil (2) oder der Halterung angeordnet ist, dass infolge des Ankoppelns der Schweißdrahtbevorratungseinrichtung (50) eine Wirkverbindung zwischen der Schweißdrahtbevorratungseinrichtung (50) und der Bremseinrichtung (208) erzeugbar ist.

## Claims

1. Orbital welding device (1),
at least comprising
a frame part (2) for arranging one or more functional devices,
a coupling area (4) for coupling to a guide band (6),
wherein the guide band (6) is preferably being fastened to a tube (8) in an operating state, the guide band (6) surrounds the tube (10) in the circumferential direction (U) and the guide band (6) extends in the axial direction (A), thereby overlapping the tube (10) in sections,
a connecting device (11) for connecting at least one feed line (12),
a welding head (14) connected to the connection device (11) via the feed line (12),
at least one drive device (16), wherein the drive device (16) interacts with the guide band (6) for moving the welding device (1) with respect to the guide band (6), and
a holding device (200) arranged on the frame part (2), a fixing device and an axis device (202), wherein the holding device (200) comprises a bearing seat (214)
wherein the axis device (202) being designed to receive a welding wire storage device (50), wherein the axis device (202) holds the welding wire storage device (50) in such a way that it can be rotated at least at times with respect to the frame part (2),
wherein the axle device (202) can be locked in at least one position with respect to the frame part (2) by means of the fixing device and the axis device (202) comprising an operating element (206)
**characterized in that**
that the fixing device comprises a first axis-side fixing means (210) and a second fixing means (212), wherein the second fixing means (212) is arranged or formed on a bearing seat (214) or in the region of a bearing seat (214) of the holding device (200), wherein the first fixing means (210) and the second fixing means (212) lock the axis device (202) with respect to the holding device (200) depending on a rotation of the axis device (202) about its longitudinal axis which can be effected by means of the operating element (206) and therefore a rotation of the first fixing means (210) about the longitudinal axis of the axis device (202)
and
wherein the axis device (202) represents a subassembly, comprising one axis (203) on which a first axle bearing seat and a second axle bearing seat for positioning in or on the holding device (200) are formed, a first fixing means (210) for interacting with a second fixing means (212) formed in the area of the holding device (200), a brake device (208) for reducing the rotation speed of the welding wire storage device (50) and an operating element (206) for manual positioning and rotating of the axis device (202).

2. Device according to claim 1,
**characterized in that**
the holding device (200, 201) is designed such that it can receive the axis device (202) on both sides of the welding wire storage device (50) in defined bearing seats in case the welding wire storage device (50) is coupled with the welding device (1).

3. Device according to claim 2,
**characterized in that**
the frame part (2) is designed or is provided with positioning means (214) in such a way that a welding wire storage device (50) is aligned in a decoupled state with respect to the holding device (200) in such a way that by inserting of the axis device (202) into the defined bearing seats, the welding wire storage device (50) is transferred from the decoupled state to a coupled state.

4. Device according to one of the preceding claims,
**characterized in that**
a braking device (208) is provided for slowing down the rotational movement of the welding wire storage device (50), wherein the braking device (208) can prevent at least uncontrolled unwinding of a welding wire (50) held on the welding wire storage device.

5. Device according to claim 4,
**characterized in that**
the braking device (208) is designed as part of the axle device (202) such that a movement of the axle device (202) as a result of an operation of the control element (206) causes a movement of the braking device (208).

6. Device according to claim 4 or claim 5,
**characterized in that**
the braking device (208) comprises a coupling element (216) for form-fit coupling with an at least partially negative formed connection (254) of the welding wire storage device (50).

7. Device according to claim 4,
**characterized in that**
the braking device (208) is arranged on the frame part (2) or the holder such that due to the coupling of the welding wire storage device (50) an operative connection between the welding wire storage device (50) and the braking device (208) can be generated.

## Revendications

1. Dispositif de soudage orbital (1), comprenant au moins
une partie de cadre (2) pour l'agencement d'un ou de plusieurs dispositifs fonctionnels,
une zone de couplage (4) pour le couplage à une bande de guidage (6),
dans lequel dans un état de fonctionnement la bande de guidage (6) est de préférence fixée à un tube (8), la bande de guidage (6) entoure le tube (10) dans le sens périphérique (U) et la bande de guidage (6) s'étend dans le sens axial (A), dans lequel elle recouvre par section le tube (10),
un dispositif de raccordement (11) pour le raccordement d'au moins une conduite d'alimentation (12), une tête de soudage (14) reliée au dispositif de raccordement (11) par le biais de la conduite d'alimentation (12),
au moins un dispositif d'entraînement (16), dans lequel le dispositif d'entraînement (16) coagit avec la bande de guidage (6) pour le déplacement du dispositif de soudage (1) par rapport à la bande de guidage (6), et
un dispositif de retenue (200) agencé sur la partie de cadre (2), un dispositif de fixation et un dispositif d'axe (202), dans lequel le dispositif de retenue (200) présente un siège de palier (214),
dans lequel le dispositif d'axe (202) est réalisé pour la réception d'un dispositif de stockage de fil de soudage (50), dans lequel le dispositif d'axe (202) reçoit le dispositif de stockage de fil de soudage (50) de telle manière qu'il puisse être tourné au moins temporairement par rapport à la partie de cadre (2), dans lequel
le dispositif d'axe (202) peut être arrêté au moyen du dispositif de fixation par rapport à la partie de cadre (2) dans au moins une position et le dispositif d'axe présente un élément de commande (206),
**caractérisé en ce que**
le dispositif de fixation comporte un premier moyen de fixation (210) côte axe et un second moyen de fixation (212), dans lequel le second moyen de fixation (212) est agencé ou est réalisé au niveau du siège de palier (214) ou dans la zone du siège de palier (214) du dispositif de retenue (200), dans lequel le premier moyen de fixation (210) et le second moyen de fixation (212) provoquent en fonction d'une rotation pouvant être provoquée au moyen de l'élément de commande (206) du dispositif d'axe (202) autour de son axe longitudinal et ainsi une rotation du premier moyen de fixation (210) autour de l'axe longitudinal du dispositif d'axe (202) un arrêt du dispositif d'axe (202) par rapport au dispositif de retenue (200) et
le dispositif d'axe (202) constitue un module qui présente un axe (203) au niveau lequel un premier siège de palier d'axe et un second siège de palier d'axe sont réalisés pour le positionnement dans ou au niveau du dispositif de retenue (200), présente un premier moyen de fixation (210) pour la coopération avec un second moyen de fixation (212) réalisé dans la zone du dispositif de retenue (200), un dispositif de freinage (208) pour la réduction de la vitesse de rotation du dispositif de stockage de fil de soudage (50) et un élément de commande (206) pour le positionnement manuel ainsi que la rotation du dispositif d'axe (202).

2. Dispositif selon la revendication 1,
**caractérisé en ce que**
le dispositif de retenue (200, 201) est conçu de telle manière qu'il puisse recevoir le dispositif d'axe (202) des deux côtés du dispositif de stockage de fil de soudage (50) dans des sièges de palier définis, lorsque le dispositif de stockage de fil de soudage (50) est couplé au dispositif de soudage (1).

3. Dispositif selon la revendication 2,
**caractérisé en ce que**
la partie de cadre (2) est conçue ou est pourvue de moyens de positionnement (214) de telle manière qu'un dispositif de stockage de fil de soudage (50) soit orienté dans un état découplé par rapport au dispositif de retenue (200) de telle manière qu'un transfert du dispositif de stockage de fil de soudage (50) de l'état découplé dans un état couplé soit effectué par l'introduction du dispositif d'axe (202) dans les sièges de palier définis.

4. Dispositif selon l'une des revendications précédentes,
**caractérisé en ce que**
un dispositif de freinage (208) est prévu pour le ralentissement du mouvement de rotation du dispositif de stockage de fil de soudage (50), dans lequel le dispositif de freinage (208) peut empêcher au moins un déroulement non contrôlé d'un fil de soudage (50) conservé sur le dispositif de stockage de fil de soudage.

5. Dispositif selon la revendication 4,
**caractérisé en ce que**
le dispositif de freinage (208) est réalisé comme partie du dispositif d'axe (202) de telle manière qu'un mouvement du dispositif d'axe (202) à la suite d'une commande de l'élément de commande (206) puisse provoquer un mouvement du dispositif de freinage (208).

6. Dispositif selon la revendication 4 ou la revendication 5,
**caractérisé en ce que**
le dispositif de freinage (208) présente un élément de couplage (216) pour le couplage à complémentarité de formes avec un point de liaison (254) réalisé au moins partiellement négativement par rapport à celui-ci du dispositif de stockage de fil de soudage (50).

7. Dispositif selon la revendication 4,
**caractérisé en ce que**
le dispositif de freinage (208) est agencé sur la partie de cadre (2) ou le support de telle manière qu'à la suite du couplage du dispositif de stockage de fil de soudage (50) une liaison active entre le dispositif de stockage de fil de soudage (50) et le dispositif de freinage (208) puisse être générée.
